# EUROPEAN PATENT SPECIFICATION

(11) **EP 4 567 007 B1**
(45) Date of publication and mention of the grant of the patent: **28.10.2026**
(21) Application number: 22955116.3
(22) Date of filing: 24.11.2022
(51) Int. Cl.: C02F 11/10, C02F 11/122, C02F 11/127, C02F 11/04, C02F 3/28, C02F 3/30, C02F 103/20, C02F 9/00, C02F 11/06, C02F 103/32, C10L 9/08, B09B 3/40, B09B 3/65

(54) **SYSTEM FOR REDUCING AMOUNT OF ORGANIC WASTE AND INCREASING BIOGAS PRODUCTION COMBINED WITH HYDROTHERMAL CARBONIZATION DEVICE HAVING IMPROVED ENERGY CONSUMPTION EFFICIENCY**
SYSTEM ZUR REDUZIERUNG DER MENGE AN ORGANISCHEM ABFALL UND ZUR ERHÖHUNG DER BIOGASPRODUKTION IN KOMBINATION MIT EINER HYDROTHERMALEN KARBONISIERUNGSVORRICHTUNG MIT VERBESSERTER ENERGIEVERBRAUCHSEFFIZIENZ
SYSTÈME DE RÉDUCTION DE QUANTITÉ DE DÉCHETS ORGANIQUES ET D'AUGMENTATION DE PRODUCTION DE BIOGAZ COMBINÉ À UN DISPOSITIF DE CARBONISATION HYDROTHERMALE À EFFICACITÉ ÉNERGÉTIQUE AMÉLIORÉE

(30) Priority: 12.08.2022 KR 20220101222
(43) Date of publication of application: 11.06.2025
(73) Proprietor: BKT Co., Ltd., Daejeon 34109 (KR)
(72) Inventor: JUNG, Min Ki, Daejeon 35202 (KR); CHOI, Jae Min, Daejeon 34109 (KR); JEONG, Guk, Daejeon 34232 (KR); CHA, Myung Chul, Daejeon 34109 (KR); CHOI, Young Soo, Sejong 30126 (KR)
(74) Representative: Sander, Rolf
(86) International application number: PCT/KR2022/018730
(87) International publication number: WO 2024/034744

(56) References cited:
- EP-A1- 2 746 231
- WO-A1-2017/102814
- JP-A- 2003 024 912
- KR-A- 20180 025 326
- KR-A- 20200 095 234
- KR-B1- 101 830 896
- KR-B1- 101 830 902
- US-A1- 2017 327 387
- US-A1- 2022 041 485

## Description

### CROSS-REFERENCE TO RELATED APPLICATIONS

This application is a continuation of International Application No. PCT/KR2022/018730, filed on 2022-11-24, which claims priority to Korean Patent Application No. 10-2022-0101222, filed on 2022-08-12.

### Technical Field

The present disclosure relates to an organic waste reduction and biogas production system combined with a hydrothermal carbonization device that improves energy consumption efficiency.

### Background Art

Contents described in this part merely provide background information of the present embodiment, and do not constitute a prior art.

Due to regulatory changes, such as the ban direct land filling and ocean dumping of organic waste, there is an upsurge of interest in organic waste reduction, recycling, and biogas production.

Anaerobic digestion is a treatment method that is very suitable for the weight loss and stabilization of organic waste. In particular, a methane CH₄ gas generated in an anaerobic digestion process may be used as another energy source. Accordingly, the anaerobic digestion is very useful and environmentally friendly process for treating organic waste.

However, the digestate resulting from the anaerobic digestion still contains biomass generated from an anaerobic digester. This biomass has limitations in reduction through mechanical dewatering due to internal water within cells and interstitial water, and other factors.

In relation to the sludge reduction, there has been recent attention on applying additional reduction treatments to process biomasses generated in digester. In particular, the application of hydrothermal carbonization using a high temperature and high pressure is expanding. However, since high-temperature thermal energy is used, efforts are being made to maximize the utilization of the thermal energy while preserving the thermal energy, and to address operational issues that may arise due to high pressure.
As background art, WO 2017/102814 A1 (D1) discloses a system combining anaerobic digestion with hydrothermal carbonization (HTC), it describes a much simpler process flow. D1's system operates by switching the entire process order, alternating between an HTC mode (post-digestion) and a TDH mode (pre-digestion).
EP 2 746 231 A1 (D2) discloses a system for treating process water from an HTC process that includes an anaerobic digester.

US 2017/327387 A1 (D3) discloses a hydrothermal carbonization device comprising a preheating tank, a plurality of hydrothermal carbonization reactors and a decompression tank.

US 2022/041485 A1 (D4) describes a sequenced hydrothermal carbonization process with at least two parallel thermal reactors that are batch fed in an alternating or cyclic manner and in which heat energy for a current batch treatment process is transferred from a preceding batch treatment process by transferring steam and water from the preceding process to the current process.

### DISCLOSURE

### Technical Problem

An object of an embodiment of the present disclosure is to provide an organic waste treatment system that can reduce the final treatment cost of organic waste by minimizing the amount of sludge that is finally generated, by associating a hydrothermal carbonization device device with improved energy consumption efficiency to the downstream of an anaerobic digester.

An object of an embodiment of the present disclosure is to provide a biogas production system that can enhance biogas production by returning the effluent generated during the hydrothermal carbonization reaction and a dewatering process by a filter press of anaerobic digested sludge to the anaerobic digester.

An object of an embodiment of the present disclosure is to provide an organic waste redcution system with improved energy consumption efficiency of the hydrothermal carbonization device, aimed at providing a system that reduces energy consumption by reusing thermal energy within the system.

Furthermore, an object of an embodiment of the present disclosure is to provide an organic waste reduction and biogas production system, which can reduce an impact load imposed on treatment system connected to digestion liquor.

### Technical Solution

The subject matter of the present invention is defined in independent claim 1. Embodiments are defined in dependent claims. According to the present invention, there is provided an organic waste reduction and biogas enhancement system combined with a hydrothermal carbonization device. The system includes a storage tank configured to receive and store organic waste, an anaerobic digester configured to digest organic waste from the storage tank, digest organic matter, and generate biogas, a dewatering unit configured to primarily dewater organic waste discharged from the anaerobic digester, a hydrothermal carbonization device configured to receive and hydrothermally carbonize the dewaterd organic waste, and a filter press configured to secondarily dewater the hydrothermally carbonized product discharged from the hydrothermal carbonization device.

According to the present invention, the hydrothermal carbonization device includes a preheating tank configured to receive the organic waste discharged by the dewatering unit and to preheat the organic waste, a plurality of hydrothermal carbonization reactors each configured to receive the preheated organic waste from the preheating tank and to hydrothermally carbonize the preheated organic waste within a preset environment, a decompression tank configured to receive all of remaining products except some of gaseous components, among the hydrothermal carbonization products, from each hydrothermal carbonization reactor, separate a gaseous component and components other than gases, and discharge the gaseous component to the preheating tank and discharge remaining products, a steam-water separator configured to receive some of the gaseous component, among the hydrothermal carbonization products, from any one hydrothermal carbonization reactor, separate a gaseous component and a liquid component, and discharge the gaseous component to another hydrothermal carbonization reactor and the liquid component to the decompression tank, a heat exchanger configured to receive the hydrothermal carbonization product discharged from the decompression tank, cool the hydrothermal carbonization product at a preset temperature, and supply the hydrothermal carbonization product to the filter press, and a controller configured to control an operation of each of the components within the hydrothermal carbonization device.

According to the present invention, each hydrothermal carbonization reactor performs hydrothermal carbonization of the organic waste through the same process, but performs different operations with a time difference.

According to an aspect of the present disclosure, the controller controls some of the gaseous component to be discharged to the steam-water separator when pressure attributable to the gaseous component within any one hydrothermal carbonization reactor is a preset reference value or more.

According to an aspect of the present disclosure, the preset environment has pressure of 5 to 64 bar and a temperature of 150 to 280°C.

According to an aspect of the present disclosure, the hydrothermal carbonization device further includes an ejector configured to inject, into any one hydrothermal carbonization reactor, steam that is introduced from an outside and the gaseous component that is discharged by being separated in the steam-water separator.

According to an aspect of the present disclosure, the heat exchanger is configured to combine the heated cooling water generated by cooling the hydrothermally carbonized product with a boiler that supplies steam to the hydrothermal carbonization device, or to combine it with the feed water for the boiler that heats the anaerobic digester, thereby reducing energy consumption.

According to an aspect of the present disclosure, the filter press discharges the effluent generated during the dewatering of the hydrothermally carbonized product to the storage tank for use in anaerobic digestion.

According to an aspect of the present disclosure, the organic waste is selected from a group consisting of concentrate sludge generated from a sewage and wastewater treatment apparatus, food waste on which pre-treatment has been performed, wastewater, livestock manure, and a mixture of any one or more of them.

According to an aspect of the present disclosure, the system for reducing the amount of the organic waste and increasing biogas production further includes a digestion liquor treatment unit configured to remove a nitrogen component within effluent discharged by the dewatering unit.

According to an aspect of the present disclosure, the digestion liquor treatment unit includes a partial nitrification reactor configured to perform partial nitrite by receiving the digestion liquor, an ammonium oxide bacterium (AOB) granule generation tank configured to generate AOB granules by receiving sludge with reduced settling properties, which is present in the partial nitrification reactor, an intermediate storage tank configured to receive and store treated water from the partial nitrification reactor while settling and removing solid matters from the treated water, and an anammox reaction tank configured to receive the treated water from the intermediate storage tank and to remove a nitrogen component by an anaerobic ammonium oxide (anammox) reaction.

### Advantageous Effects

As described above, according to an aspect of the present disclosure, there is an advantage of reducing energy consumption for subsequent drying or a treatment cost for the final disposal by hydrothermally solubilizing digested sludge from anaerobic digestion in the downstream process and dewatering it using the filter press.

According to an aspect of the present disclosure, there is an advantage of improving the energy efficiency of the system by reducing the thermal energy generated from the hydrothermal carbonization device within the organic waste reduction and biogas production system.

Furthermore, according to an aspect of the present disclosure, there is an advantage of reducing the impact load imposed on the treatment system connected to the digestion liquor.

### Brief Description of Drawings

FIG. 1 is a diagram illustrating a process diagram of a system for reducing the amount of organic waste and increasing biogas production, which is combined with the hydrothermal carbonization device, according to an embodiment of the present disclosure.
FIG. 2 is a diagram illustrating a construction of the hydrothermal carbonization device according to an embodiment of the present disclosure.
FIG. 3 is a diagram illustrating an operation sequence of a hydrothermal carbonization reactor according to an embodiment of the present disclosure.
FIG. 4 is a diagram illustrating an operation sequence of each hydrothermal carbonization reactor according to an embodiment of the present disclosure.
FIGS. 5 to 10 are diagram illustrating operation sequences of the hydrothermal carbonization device according to an embodiment of the present disclosure.
FIG. 11 is a diagram illustrating a construction of the hydrothermal carbonization device according to another embodiment of the present disclosure.
FIG. 12 is a diagram illustrating a construction of a digestion liquor treatment unit according to an embodiment of the present disclosure.

### Mode for Invention

The present disclosure may be changed in various ways and may have various embodiments. Specific embodiments are to be illustrated in the drawings and specifically described. Similar reference numerals are used for similar components while each drawing is described. The invention is defined in the appended claims.

Terms, such as a first, a second, A, and B, may be used to describe various components, but the components should not be restricted by the terms. The terms are used to only distinguish one component from another component. For example, a first component may be referred to as a second component without departing from the scope of rights of the present disclosure. Likewise, a second component may be referred to as a first component. The term "and/or" includes a combination of a plurality of related and described items or any one of a plurality of related and described items.

When it is described that one component is "connected" or "coupled" to the other component, it should be understood that one component may be directly connected or coupled to the other component, but a third component may exist between the two components. In contrast, when it is described that one component is "directly connected to" or "directly coupled to" the other component, it should be understood that a third component does not exist between the two components.

Terms used in this application are used to only describe specific embodiments and are not intended to restrict the present disclosure. An expression of the singular number includes an expression of the plural number unless clearly defined otherwise in the context. In this specification, a term, such as "include" or "have", is intended to designate the presence of a characteristic, a number, a step, an operation, a component, a part or a combination of them, and should be understood that it does not exclude the existence or possible addition of one or more other characteristics, numbers, steps, operations, components, parts, or combinations of them in advance.

All terms used herein, including technical terms or scientific terms, have the same meanings as those commonly understood by a person having ordinary knowledge in the art to which the present disclosure pertains, unless defined otherwise in the specification.

Terms, such as those defined in commonly used dictionaries, should be construed as having the same meanings as those in the context of a related technology, and are not construed as ideal or excessively formal meanings unless explicitly defined otherwise in the application.

Furthermore, each construction, process, procedure, or method included in each embodiment of the present disclosure may be shared within a range in which the constructions, processes, procedures, or methods do not contradict each other technically.

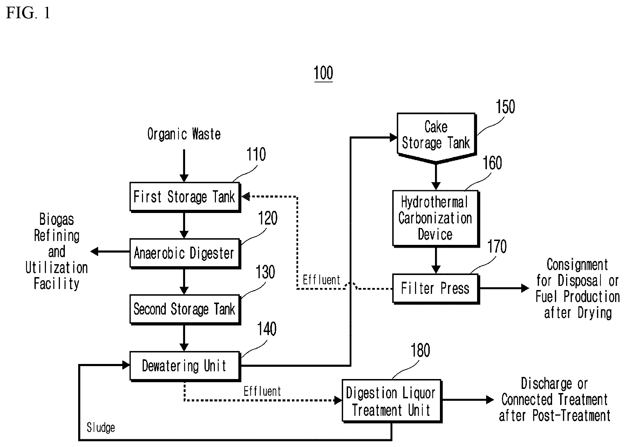

FIG. 1 is a diagram illustrating a process diagram of a system for reducing the amount of organic waste and increasing biogas production, which is combined with the hydrothermal carbonization device, according to an embodiment of the present disclosure.

As illustrated, a system 100 for reducing the amount of organic waste and increasing biogas production (hereinafter abbreviated as a "system 100") with which a hydrothermal carbonization device is combined according to an embodiment of the present disclosure includes a first storage tank 110, an anaerobic digester 120, a second storage tank 130, a dewatering unit 140, a cake storage tank 150, a hydrothermal carbonization device 160, a filter press 170, and a digestion liquor treatment unit 180.

The first storage tank 110 receives organic waste carried from the outside and effluent discharged by the filter press 170, and stores the organic waste and the effluent until they are input to the anaerobic digester 120.

The organic waste carried from the outside may be selected from a group consisting of concentrate sludge generated from a sewage and wastewater treatment apparatus, food waste on which pre-treatment has been performed, wastewater, livestock manure, and a mixture of them. Separate pre-treatment may be performed on such organic waste before the organic waste is introduced into the first storage tank 110 for effective anaerobic digestion at the rear end.

For example, the sludge generated from the sewage and wastewater treatment apparatus may be transferred to the first storage tank 110 in the state in which the sludge has been concentrated to have a total solid (TS) of about 4 to 5% via a thickener. The food waste can undergo crushing and sorting, specific gravity separation, and fine crushing to remove indigestible components and may be transported to the first storage tank 110 in the state crushed to an appropriate size for digestion. In the case of livestock manure sludge, it can be transferred to the first storage tank 110 after removing foreign substances. Furthermore, when processing two or more types of organic waste are mixed and treated, the two or more types of organic waste together, pretreatment can be performed individually for each waste type before mixing them in the first storage tank 110. However, a pre-treatment method for the organic waste is not limited thereto.

The anaerobic digester 120 receives waste in which the organic waste from the first storage tank 110 and the effluent of the filter press 170 are mixed, and digests the waste. Accordingly, the anaerobic digester 120 reduces the amount of organic waste, stabilizes the organic waste, and generates a gas product (biogas) and digested sludge.

The anaerobic digester 120 generates biogas from the organic waste by the action of anaerobic microbes, and decomposes the organic matter. The biogas generated from the anaerobic digester 120 is used to produce electricity through a biogas refining facility or is reused in a thermal energy form. The digestive sludge generated from the anaerobic digester 120 is discharged to the second storage tank 130.

The second storage tank 130 receives the digested sludge generated from the anaerobic digester 120 and temporarily stores the digested sludge until the digested sludge is primarily dewaterd in the dewatering unit 140. Furthermore, the second storage tank 130 may receive waste activated sludge discharged from the downstream digestion liquor treatment unit 180 and store it along with the digested sludge until the waste activated sludge is transferred to the dewatering unit 140.

The dewatering unit 140 receives a mixture of the digested sludge of the second storage tank 130 and the waste activated sludge, and primarily removes moisture from the mixture. The dewatering unit 140 separates the sludge mixture into a dewaterd cake and effluent, and discharges the cake to the cake storage tank 150 and the effluent to the digestion liquor treatment unit 180.

The dewatering unit 140 is a mechanical dewatering unit, and may be a centrifugal dewatering unit, for example. Organic waste (sludge) that is primarily dewaterd in the dewatering unit 140 has a percentage of water content of approximately 78%. The organic waste primarily dewaterd in the dewatering unit 140 is discharged to the hydrothermal carbonization device 160, and post treatment (hydrothermal carbonization) for reducing the amount of the organic waste is performed on the organic waste.

Furthermore, the effluent is discharged from the dewatering unit 140 to the digestion liquor treatment unit 180. The digestion liquor treatment unit 180 to be described later performs post treatment that removes a nitrogen component within the liquor.

The cake storage tank 150 receives the primarily dewaterd organic waste from the dewatering unit 140, and temporarily stores the primarily dewaterd organic waste until the primarily dewaterd organic waste is transferred to the hydrothermal carbonization device 160.

The hydrothermal carbonization device 160 receives the organic waste of the cake storage tank 150, performs hydrothermal carbonization (HTC) on the organic waste, and discharges the hydrothermal carbonization product to the filter press 170.

In the hydrothermal carbonization, when a temperature of a closed reactor is raised by an external heat source in the closed system of the reactor, some of organic matters of a solid matter are decomposed by hot water in a range of 150 to 280°C, and a carbonization reaction is performed without the evaporation of moisture. In this process, a decarboxylation reaction and a dehydration reaction are derived, the energy density of solid fuel is increased via carbon fixing, and dewatering properties can be improved due to hydrophobicity.

The hydrothermal carbonization device 160 destroys the cell wall of the organic waste and discharges internal water under a preset temperature and pressure, thereby improving the dewatering properties of the waste and decomposing a high molecule material into a low molecule material. Accordingly, the hydrothermal carbonization treatment for the organic waste further improves a moisture removal rate in the filter press 170 at the rear end.

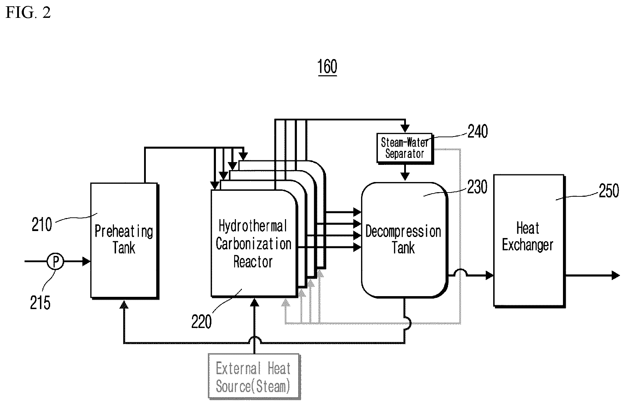

A detailed construction and operation sequence of the hydrothermal carbonization device 160 is described later with reference to FIGS. 2 to 11.

The filter press 170 receives the hydrothermal carbonization product discharged by the hydrothermal carbonization device 160, and performs solid-liquid separation on the hydrothermal carbonization product. The filter press 170 discharges the effluent to the first storage tank 110 and the dewaterd cake for the final disposal.

The dewaterd cake discharged by the filter press 170 may be used in fuel conversion after dry depending on a disposal method or may be taken out to the outside and taken care of on a consignment basis. A percentage of water content of the dewaterd cake discharged by the filter press 170 is 45% or less.

The filter press 170 performs dewatering through pressure filtration and compression methods, offering the advantage of achieving a lower moisture content compared to a conventional mechanical dewatering unit because the filter press is compactly installed in a small site area.

The filter press 170 is operated as a batch, and operates in the sequence of the input of a target, primary solid-liquid separation by pressure filtration, dewatering by high pressure squeezing, and the detachment of a separated cake. In this case, in order to feed the hydrothermally carbonized product into the filter press 170, a separate storage tank (not illustrated) may be included between the hydrothermal carbonization device 160 and the filter press 170.

As described above, the filter press can achieve the lowest percentage of moisture content among conventional mechanical dewatering units. In general, if primarily dewaterd sludge (a percentage of water content of about 80%) is dewaterd by only the filter press, a percentage of water content of a discharged dewaterd cake is merely a level of 55 to 65%.

However, the system 100 sequentially includes the hydrothermal carbonization device 160 and the filter press 170, and reduces the amount of organic waste which is processed through anaerobic digestion in the state in which the dewatering properties of the organic waste have been improved by hydrothermally carbonizing the organic waste. Accordingly, the final dewatered cake discharged by the system 100 has a percentage of moisture content of 45% or less. As a result, the system 100 for reducing the amount of organic waste and increasing biogas production can reduce the amount of discharged waste by 75% or more.

As described above, the system 100 improves the dewatering properties and biodegradability of organic waste because the anaerobic digested sludge undergoes hydrothermal carbonization, converting high-molecular organic substances into low-molecular organic substances. Accordingly, the filtrate discharged during the solid-liquid separation process of the filter press 170 contains a large amount of biodegradable dissolved organic material.

Such filtrate is returned to the first storage tank 110 and used in digestion treatment again in the anaerobic digester 120. Due to the digestion treatment, biogas production of the anaerobic digester 120 can be increased by 20% or more compared to a case in which the filtrate is not returned.

The digestion liquor treatment unit 180 receives the liquor from the primary dewatering of mixed sludge, such as the digested sludge, from the dewatering unit 140, and removes nitrogen components from the liquor to discharge treated water. The treated water discharged by the digestion liquor treatment unit 180 may be separately subjected to post-treatment at the downstream stage or may be treated in association with another water treatment devices, such as the sewage and wastewater treatment apparatus.

As described above, in the system 100, the filtrate of the filter press 170 is recovered and converted into a biogas in the anaerobic digester 120. The liquor generated by the dewatering unit 140 at the downstream of the anaerobic digester 120 contains an organic material having a low concentration and a nitrogen component having a high concentration.

The nitrogen component of the liquor may affect the quality of treated water of the sewage and wastewater treatment apparatus if the liquor is treated in association with the sewage and wastewater treatment apparatus, and it is not easy to directly release the nitrogen component. Accordingly, the digestion liquor treatment unit 180 removes nitrogen within the liquor, and returns or releases treated water thereof to the sewage and wastewater treatment apparatus.

Furthermore, the digestion liquor treatment unit 180 discharges the waste activated sludge in the nitrogen treatment process of the liquor. The waste activated sludge of the digestion liquor treatment unit 180 is recovered by the second storage tank 130 again, and is treated again in the dewatering unit 140 and the hydrothermal carbonization device 160.

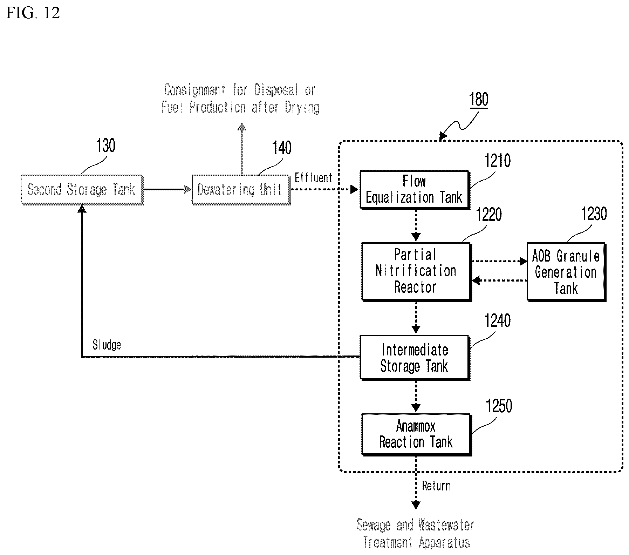

A detailed construction of the digestion liquor treatment unit 180 is described later with reference to FIG. 12.

As described above, in the system 100, the hydrothermal carbonization device 160 and the filter press 170 are sequentially disposed at the downstream of the anaerobic digester 120. Accordingly, a percentage of water content of the dewaterd cake discharged by the system 100 can be lowered to 45% or less (35 to 45%).

In general, a percentage of water content of the primarily dewaterd sludge discharged in the sewage and wastewater process is 80% or more. In order to lower the percentage of water content of the primarily dewaterd sludge to a percentage of water content 10% or less of sludge by using only a dryer, great thermal energy is consumed. However, the system 100 can significantly reduce the amount of thermal energy consumption that is consumed for the dry of the dewaterd cake because the dewaterd cake having a percentage of water content of 45% or less is generated.

Moreover, the system 100 can also increase the amount of biogas generated in the anaerobic digester 120 by 20% or more, compared to a case in which only anaerobic digestion is solely performed, because the filtrate discharged by the filter press 170 is returned to the anaerobic digester 120 and used as an additional organic matter source for biogas production.

That is, the system 100 can improve biogas production of the anaerobic digester 120 compared to a common anaerobic digestion system (sole anaerobic digestion treatment) because biological and non-biodegradable materials are destroyed in the hydrothermal carbonization device 160 and an organic material having improved biodegradability is returned to the anaerobic digester 120 at the front end again.

Furthermore, the system 100 further includes the digestion liquor treatment unit 180 to process the liquor containing high concentrations of nitrogen components generated during the anaerobic digestion in the anaerobic digester 120, thereby minimizing the impact on the water quality of the sewage and wastewater treatment apparatus where the liquor is connected for treatment.

FIG. 2 is a diagram illustrating a construction of the hydrothermal carbonization device 160 according to an embodiment of the present disclosure.

Referring to FIG. 2, the hydrothermal carbonization device 160 according to an embodiment of the present disclosure includes a preheating tank 210, a transfer pump 215, a plurality of hydrothermal carbonization reactors 220, a decompression tank 230, a steam-water separator 240, a heat exchanger 250, and a controller (not illustrated).

The preheating tank 210 receives organic waste from the cake storage tank 150 and preheats the organic waste. The hydrothermal carbonization reactor 220 to be described later hydrothermally carbonizes the organic waste under a relatively high temperature and high-pressure condition. Accordingly, relatively large thermal energy needs to be consumed. In order to prevent such a problem, the preheating tank 210 is disposed at the front end of the hydrothermal carbonization reactor 220 in a treatment process, and preheats the organic waste to be carbonized.

The preheating tank 210 does not receive thermal energy (basically a steam form) from a separate heat source, but receives gaseous components separated in the decompression tank 230 to be described later. The gaseous components separated in the decompression tank 230 have a constant temperature. The gaseous components separated in the decompression tank 230 are returned to the preheating tank 210 and used in preheating rather than being vented to the outside. Accordingly, the preheating tank 210 can preheat the organic waste introduced by the gaseous components separated in the decompression tank 230 without the need to receive thermal energy from a separate heat source, thereby minimizing energy consumption.

The transfer pump 215 transfers the organic waste stored in the cake storage tank 150 to the preheating tank 210. The transfer pump 215 is controlled in association with an operation sequence of the hydrothermal carbonization device 160 by the controller (not illustrated) in order to constantly transfer the organic waste from the cake storage tank 150 to the preheating tank 210.

The hydrothermal carbonization reactor 220 receives the preheated organic waste from the preheating tank 210 and hydrothermally carbonizes the preheated organic waste. The hydrothermal carbonization reactor 220 hydrothermally carbonizes the organic waste so that the organic waste can be smoothly subjected to dewatering treatment in the filter press 170 and finally final disposed (dry or taken care of on a consignment basis).

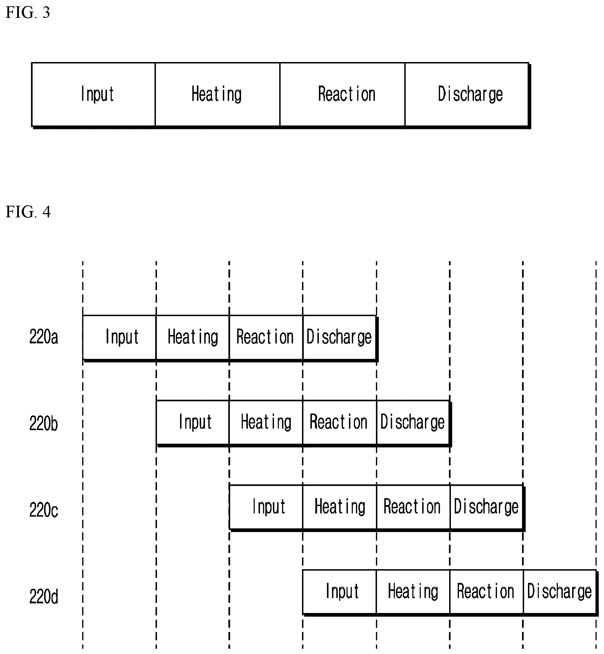

The hydrothermal carbonization reactor 220 operates as illustrated in FIG. 3.

FIG. 3 is a diagram illustrating an operation sequence of the hydrothermal carbonization reactor 220 according to an embodiment of the present disclosure.

Referring to FIG. 3, first, the preheated organic waste is input to the hydrothermal carbonization reactor 220. When the organic waste is input, a preset environment needs to be created so that a hydrothermal carbonization reaction occurs in the hydrothermal carbonization reactor 220. The preset environment may be an environment having a temperature of 150 to 280°C, more specifically, a temperature of 180 to 250°C in order to improve the resolution of the organic waste under pressure of 5 to 64 bar, more specifically, about 10 to 40 bar. In this case, thermal energy (steam) is applied from the external heat source so that the hydrothermal carbonization reactor 220 can secure a preset temperature environment. When the preset environment, in particular, a temperature condition is formed due to a sufficient temperature rise, a hydrothermal carbonization reaction occurs within the hydrothermal carbonization reactor 220. The hydrothermal carbonization reaction is performed for a preset time (e.g., several tens of minutes). After the reaction is completed, some of gaseous components included in a product is discharged to the steam-water separator 240, and all of the remaining components are discharged to the decompression tank 230. The hydrothermal carbonization reactor 220 operates as described above and hydrothermally carbonizes the organic waste.

Referring back to FIG. 2, the hydrothermal carbonization reactor 220 may be implemented in a plural number. After a hydrothermal carbonization reaction is completed in any one hydrothermal carbonization reactor 220, some of gaseous components included in a product is discharged to the steam-water separator 240. As described above, the steam-water separator 240 also separates liquid components which may be included in the gaseous components (steam) that are separated in the decompression tank 230 and that are introduced into the preheating tank 210 like the decompression tank 230. The gaseous components that are separated in the steam-water separator 240 are introduced into another hydrothermal carbonization reactor 220 and assist the creation of a temperature for hydrothermal carbonization. This is possible because each of the plurality of hydrothermal carbonization reactors 220a to 220d operates as illustrated in FIG. 4.

FIG. 4 is a diagram illustrating an operation sequence of each hydrothermal carbonization reactor according to an embodiment of the present disclosure.

The hydrothermal carbonization reactors 220a to 220d operate as described with reference to FIG. 3, but perform operations with respective time lags. For example, as illustrated in FIG. 4, the hydrothermal carbonization reactor 220b may start to receive organic waste from the preheating tank 210 only when the hydrothermal carbonization reactor 220a receives organic waste from the preheating tank 210 and enters a process in which a temperature rises. The hydrothermal carbonization reactor 220c may start to receive organic waste from the preheating tank 210 at timing at which the hydrothermal carbonization reactor 220a will start to thermally hydrolysize the organic waste. The hydrothermal carbonization reactor 220d may start to receive organic waste from the preheating tank 210 at timing at which the hydrothermal carbonization reactor discharges a product on which a reaction has been completed to the outside. If each hydrothermal carbonization reactor operates as described above, a gaseous component (steam) that is discharged by any one hydrothermal carbonization reactor 220 and that is refined is introduced into another hydrothermal carbonization reactor in which a temperature is rising, thereby being capable of reducing thermal energy consumption that is necessary for a temperature rise as described above.

Referring back to FIG. 2, as described above, the hydrothermal carbonization reactor 220 can minimize wasted energy and reduce energy consumption for a temperature rise because the hydrothermal carbonization reactor can secure some of the necessary heat for a hydrothermal carbonization reaction from a gaseous component generated from another hydrothermal carbonization reactor 220.

The hydrothermal carbonization reactor 220 includes a pressure sensor therein, and separates and discharges, to the steam-water separator 240, some of gaseous components included in a product by a hydrothermal carbonization reaction under the control of the controller (not illustrated). The hydrothermal carbonization reactor 220 senses pressure within the reactor, and separates and discharges, to the steam-water separator 240, all of the remaining gaseous components except the amount of a gaseous component that is sufficient to preheat the preheating tank 210 (by being separated in the decompression tank 230 and returned to the preheating tank 210). The hydrothermal carbonization reactor 220 performs pressure sensing and discharges, to the steam-water separator 240, the remaining gaseous components accurately except the amount of a gaseous component that is necessary for preheating so that a temperature of another hydrothermal carbonization reactor can rise. Conventionally, the entire amount of gaseous components is discharged to the decompression tank 230. Although all of the gaseous components are returned to the preheating tank and used in preheating, all of the remaining gaseous components that are used in preheating are discharged and wasted because the amount of a gaseous component more than the amount of a gaseous component necessary for the preheating is returned.

Alternatively, the hydrothermal carbonization reactor 220 senses whether gaseous components are excessively increased abnormally within the reactor or whether steam has been excessively input from the outside, by sensing internal pressure. When pressure attributable to the gaseous components within the reactor is a preset reference value or more, the hydrothermal carbonization reactor 220 discharges all of the gaseous components to the steam-water separator 240 until the pressure is less than the reference value under the control of the controller (not illustrated). The hydrothermal carbonization reactor 220 can prevent a danger of explosion of the hydrothermal carbonization reactor by discharging a predetermined amount of the gaseous components to the steam-water separator 240, and may also use heat in the heating of another hydrothermal carbonization reactor by recovering the heat.

The decompression tank 230 receives most of products that are generated as the hydrothermal carbonization reaction is completed within the hydrothermal carbonization reactor 220, and separates gaseous components and a hydrothermal carbonization product other than gases. Only the hydrothermal carbonization product (e.g., a slurry state) except the gaseous components, among the products generated by the hydrothermal carbonization reaction, corresponds to a component on which dewatering will be performed by the filter press 170. The gaseous component corresponds to a component not related to the dewatering. Accordingly, the decompression tank 230 separates the gaseous components and a product except the gaseous components from the products so that a corresponding component can be separated and used in preheating. The decompression tank 230 has relatively low pressure from the hydrothermal carbonization reactor 220. Temperatures of products are lowered by decompression. Components having a boiling point (lower than a temperature within the decompression tank) maintain a gas state, but components having a boiling point (higher than a temperature within the decompression tank) are liquefied as liquid components. As described above, a pressure difference is formed between the decompression tank 230 and the hydrothermal carbonization reactor 220 so that the state of predetermined components becomes the liquid state and the state of the remaining components becomes the gas state. The decompression tank 230 returns the separated gaseous component to the preheating tank 210 and discharges the remaining hydrothermal carbonization products to the heat exchanger 250 for post treatment.

The steam-water separator 240 receives some of gaseous components discharged from the hydrothermal carbonization reactor 220 and refines a liquid component. The hydrothermal carbonization reactor 220 is in the state in which the hydrothermal carbonization reactor has relatively high pressure. Accordingly, although only the gaseous component is discharged from the reactor 220, the liquid component is generated after the gaseous component is discharged, or the liquid component may be discharged simultaneously with the discharge of the gaseous component at high pressure. For this reason, the steam-water separator 240 separates the gaseous component and the liquid component, and discharges the liquid component to the decompression tank 230 and discharges the gaseous component to another hydrothermal carbonization reactor into which preheated organic waste will be introduced. The reason why the steam-water separator 240 separates the gaseous component and the liquid component from the product is as follows.

A component except a gas, which is included in the product generated by the hydrothermal carbonization reactor 220, corresponds to a component on which the hydrothermal carbonization reaction has already been performed. If such a component is input to the hydrothermal carbonization reactor again and experiences a hydrothermal carbonization reaction, it is inefficient and also a waste from a viewpoint of energy consumption. Furthermore, when the organic waste is input from the preheating tank 210 to a specific hydrothermal carbonization reactor 220, a proper amount of organic waste is input so that a hydrothermal carbonization reaction is smoothly performed in the hydrothermal carbonization reactor 220. At this time, if a product except a gas, which is included in the product generated by another hydrothermal carbonization reactor, is introduced into a corresponding hydrothermal carbonization reactor, a liquid component having an amount greater than a proper amount is introduced into the corresponding hydrothermal carbonization reactor. This causes an inefficient hydrothermal carbonization reaction and becomes a cause to consume thermal energy greater than a proper amount. In order to prevent such problems, the steam-water separator 240 separates a liquid component and a gaseous component within a product that is discharged by the hydrothermal carbonization reactor 220 and transfers the liquid component and the gaseous component to different components.

The steam-water separator 240 may be implemented to have any form or structure if the steam-water separator can separate a gaseous component and a liquid component.

The heat exchanger 250 adjusts a temperature of the hydrothermal carbonization product discharged from the decompression tank 230 up to a preset operation temperature of the filter press 170 that is applied to the rear end, by lowering the temperature of the hydrothermal carbonization product.

The heat exchanger 250 lowers the temperature of the hydrothermal carbonization product by circulating a coolant so that the coolant is subjected to heat exchange with the hydrothermal carbonization product having a high temperature. The temperature of the hydrothermal carbonization product discharged from the decompression tank 230 is about 100°C. Accordingly, the heat exchanger 250 lowers the temperature of the hydrothermal carbonization product to about 60°C, that is, a proper temperature range of the filter press 170, and then supplies the hydrothermal carbonization product to the filter press 170.

The coolant having a temperature raised by the action of the heat exchange with the hydrothermal carbonization product having a high temperature may be recovered as the external heat source (boiler) for supplying thermal energy (steam) to the hydrothermal carbonization reactor 220. That is, the coolant having a temperature raised joins boiler water for generating steam, thereby reducing energy that is consumed to generate the steam.

Furthermore, the coolant having a temperature raised, which is discharged by the heat exchanger 250, may join the water supply of a boiler (not illustrated) for raising the temperature of the anaerobic digester 120. In this case, energy consumption that is necessary to raise the temperature of the anaerobic digester 120 is reduced. Likewise, the coolant having a temperature raised may be circulated again as heat-exchange water for maintaining a preset operation temperature of an anammox reaction tank 1250 to be described later.

The thermal energy generated by the hydrothermal carbonization device 160 as described above may be recovered in various ways within the system 100. Accordingly, energy consumption efficiency of the system 100 is improved because all of types of thermal energy generated from the hydrothermal carbonization device 160 are used again.

The controller (not illustrated) controls an operation of each of the components within the hydrothermal carbonization device 160.

The controller (not illustrated) controls the transfer pump 215 so that organic waste to be treated is introduced into the preheating tank 210. To this end, the preheating tank 210 may include a water gauge. The controller (not illustrated) controls the waste of the cake storage tank 150 to be input to the preheating tank 210 when the water level of the preheating tank 210 is a preset water level or less, and controls the input of the waste of the cake storage tank 150 to be stopped when the water level of the preheating tank 210 is more than the preset water level.

The controller (not illustrated) may control the decompression tank 230 to return a gaseous component separated in the decompression tank 230 to be returned to the preheating tank 210 in order to preheat organic waste.

The controller (not illustrated) controls the organic waste that is preheated in the preheating tank 210 to be transferred to a hydrothermal carbonization reactor (e.g., 220a). After the organic waste is transferred, the controller (not illustrated) introduces the steam from the external heat source and the gaseous component (steam) that is separated from the product in another hydrothermal carbonization reactor (e.g., 220c) to the hydrothermal carbonization reactor 220a so that a hydrothermal carbonization reaction occurs in the hydrothermal carbonization reactor 220a. Accordingly, the hydrothermal carbonization reaction occurs in the hydrothermal carbonization reactor 220a.

At this time, the controller (not illustrated) determines whether pressure within the hydrothermal carbonization reactor 220a is a preset reference value or less. When the pressure within the hydrothermal carbonization reactor 220a is the preset reference value or less, this corresponds to a situation in which the hydrothermal carbonization reaction is performed without a hitch. In contrast, when the pressure within the hydrothermal carbonization reactor 220a is greater than the preset reference value, this corresponds to a situation in which the amount of gaseous components is increased abnormally or abnormality may occur in the reactor 220 because the steam is excessively input from the outside. Accordingly, the controller (not illustrated) discharges the gaseous components to the steam-water separator 240 until the pressure becomes the preset reference value or less. Accordingly, the controller (not illustrated) solves abnormality within the hydrothermal carbonization reactor 220a.

If the hydrothermal carbonization reaction has been performed within the hydrothermal carbonization reactor 220a for a preset time, the controller (not illustrated) discharges some of the gaseous components to the steam-water separator 240 and all of the remaining products to the decompression tank 230. In this case, in discharging the gaseous components, the controller (not illustrated) discharges, to the steam-water separator 240, all of gaseous components except the amount of gaseous components that are separated in the decompression tank 230 and that are sufficient to preheat the organic waste in the preheating tank 210. Accordingly, energy efficiency can be maximized because all of the remaining gaseous components except the gaseous components that are necessary for preheating can be used to heat another hydrothermal carbonization reactor without being discharged to the outside.

The controller (not illustrated) controls the decompression tank 230 to separate a gaseous component and a hydrothermal carbonization product a gas and controls the decompression tank 230 to discharge the gaseous component to the preheating tank 210 and the remaining hydrothermal carbonization product to the heat exchanger 250 for anaerobic digestion.

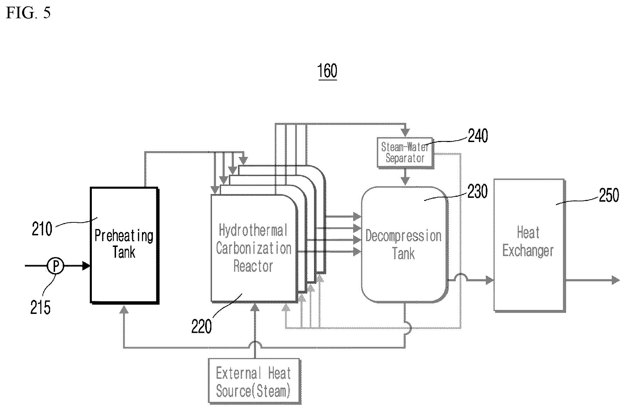

Simultaneously, the controller also controls the remaining hydrothermal carbonization reactors 220b to 220d so that the remaining hydrothermal carbonization reactors operate in parallel according to a sequence. A process of the controller (not illustrated) controlling an operation of each of the hydrothermal carbonization reactors is described later with reference to FIGS. 5 to 10.

As the controller (not illustrated) controls each of the components as described above, thermal energy that is applied from the external heat source can be minimized because a thermal energy source is recycled as much as possible without a wasted thermal energy source.

FIGS. 5 to 10 are diagram illustrating operation sequences of the hydrothermal carbonization device according to an embodiment of the present disclosure. FIGS. 5 to 10 illustrate a process of the hydrothermal carbonization device 160 receiving and treating organic waste in detail.

Referring to FIG. 5, (for the first time) organic waste is introduced and preheated in the preheating tank 210 under the control of the controller (not illustrated).

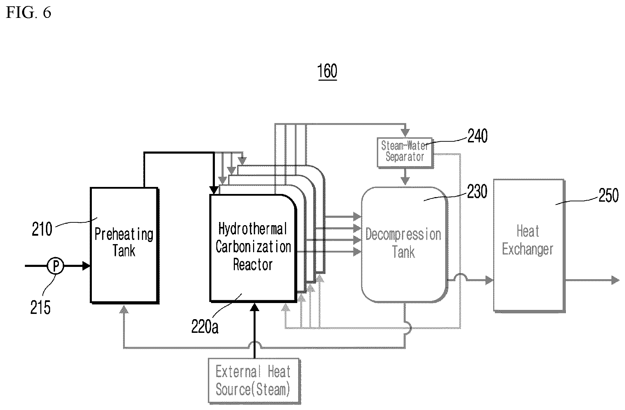

Referring to FIG. 6, the preheated organic waste is introduced into on hydrothermal carbonization reactor 220a, and has a temperature raised by (for the first time) receiving thermal energy (a steam form) from the external heat source.

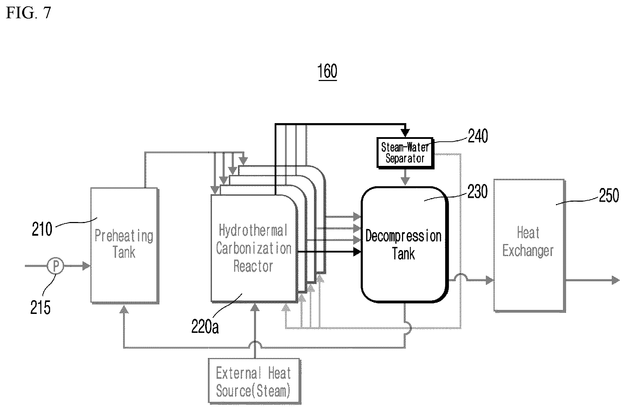

Referring to FIG. 7, when special abnormalities do not occur in the hydrothermal carbonization reactor 220a, the hydrothermal carbonization reactor 220a discharges the remaining gaseous components, except the amount of gaseous components that are separated in the decompression tank 230 and that are sufficient to preheat the organic waste in the preheating tank 210, to the steam-water separator 240, and discharges all of the remaining products to the decompression tank 230 under the control of the controller (not illustrated). When internal pressure of the hydrothermal carbonization reactor 220a is greater than a preset reference value, the hydrothermal carbonization reactor 220a discharges the gaseous components to the steam-water separator 240 and discharges all of the remaining products to the decompression tank 230 until the internal pressure drops to the preset reference value or less.

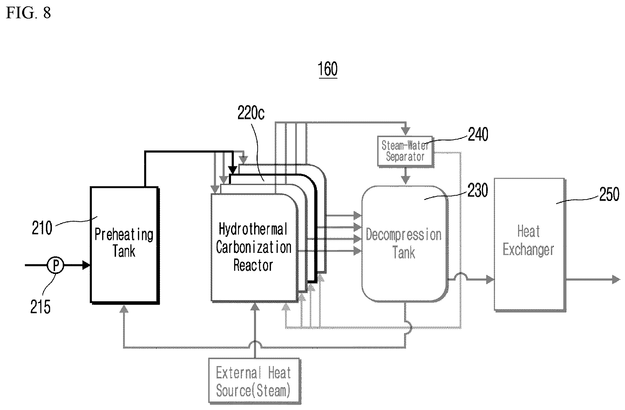

Referring to FIG. 8, organic waste is introduced into the preheating tank 210 and preheated by the gaseous components returned by the decompression tank 230. The preheated organic waste is introduced into the hydrothermal carbonization reactor 220c.

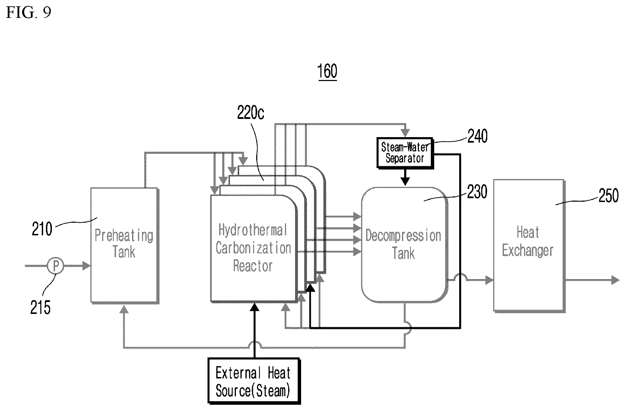

Referring to FIG. 9, a liquid component that is separated in the steam-water separator 240 is introduced into the decompression tank 230, and a gaseous component is introduced into the hydrothermal carbonization reactor 220c. Simultaneously, the hydrothermal carbonization reactor 220c has its temperature raised by receiving thermal energy (a steam form) from the external heat source.

**In** this case, in applying the gaseous component and the thermal energy to the hydrothermal carbonization reactor 220c, all of the gaseous components are first applied and the energy is then applied from the external heat source. The external heat source that applies the thermal energy to the hydrothermal carbonization reactor has relatively very high pressure. The steam-water separator 240 has relatively very low pressure. Accordingly, when both the gaseous components and the thermal energy are simultaneously applied to the hydrothermal carbonization reactor 220c, there is a problem in that the gaseous components are not fully applied from the steam-water separator 240 to the hydrothermal carbonization reactor 220c due to a pressure difference. Even worse, there may be a problem in that the thermal energy (steam) that is applied from the outside to the hydrothermal carbonization reactor 220c is discharged toward the steam-water separator 240. In order to prevent such a problem, the gaseous components are first applied from the steam-water separator 240 to the hydrothermal carbonization reactor 220c, and the thermal energy (steam) is then applied from the external heat source to the hydrothermal carbonization reactor 220c. Accordingly, all of the components can be fully applied to the hydrothermal carbonization reactor.

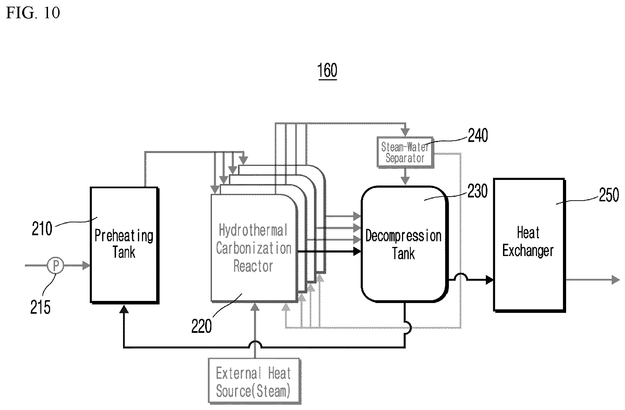

Referring to FIG. 10, the decompression tank 230 provides thermal energy that is necessary for preheating by transmitting a hydrothermal carbonization product except the gaseous components that have been separated to the heat exchanger 250 and returning the separated gaseous components to the preheating tank 210 under the control of the controller (not illustrated).

**As** the gaseous component separated in the steam-water separator 240 is introduced into the hydrothermal carbonization reactor 220c, the amount of the thermal energy that is applied by the external heat source may be reduced as much as the gaseous component. A hydrothermal carbonization reaction may be performed in the hydrothermal carbonization reactor 220c having a temperature raised as described above, and thus the processes of FIGS. 7 to 10 may be repeated and performed again.

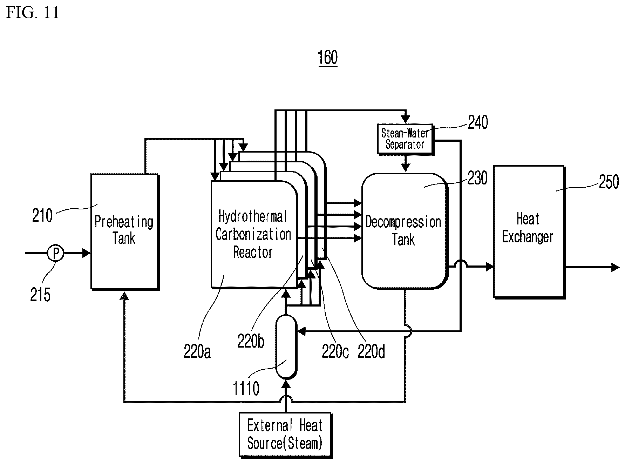

FIG. 11 is a diagram illustrating a construction of the hydrothermal carbonization device according to another embodiment of the present disclosure.

Referring to FIG. 11, the hydrothermal carbonization device 160 according to another embodiment of the present disclosure may further include an ejector 1110 in addition to the components of the hydrothermal carbonization device 160 according to an embodiment of the present disclosure.

The ejector 1110 is provided on a thermal energy supply path along which thermal energy (a steam form) that is applied from the steam-water separator 240 and the external heat source in order to raise a temperature of the hydrothermal carbonization reactor 220 is supplied to a specific hydrothermal carbonization reactor 220.

The ejector 1110 simultaneously injects a gaseous component that is separated in the steam-water separator 240 and thermal energy that is applied by the external heat source into the specific hydrothermal carbonization reactor 220 regardless of a pressure difference.

As described above, the external heat source has a relatively considerable high pressure. The steam-water separator 240 has relatively considerable low pressure. Accordingly, when both the gaseous components and the thermal energy are simultaneously applied to the hydrothermal carbonization reactor 220, the gaseous components may not be fully applied from the steam-water separator 240 to the hydrothermal carbonization reactor 220 due to a pressure difference. Rather, there may be a problem in that the thermal energy applied by the external heat source is discharged to the steam-water separator 240.

In order to prevent such a problem, the ejector 1110 is disposed at a point at which a path along which the external heat source applies the thermal energy and a path along which the steam-water separator 240 applies the gaseous component to the reactor 220 are joined.

The ejector 1110 receives the steam and the gaseous components that are provided to the paths, respectively, and enables each component to be applied to the hydrothermal carbonization reactor 220 regardless of a pressure difference. Moreover, the ejector 1110 enables the gaseous components discharged from the steam-water separator 240 to be applied to the hydrothermal carbonization reactor 220 depending on pressure by which the steam is sprayed by the external heat source. Accordingly, the ejector 1110 can prevent the gaseous components from being discharged from the hydrothermal carbonization reactor 220 to the steam-water separator 240 and also improve even the discharge speed of the gaseous components of the steam-water separator 240.

If the ejector 1110 is included, the aforementioned operation of the hydrothermal carbonization device 160 in FIG. 9 is as follows.

**The** liquid component that is separated in the steam-water separator 240 is introduced into the decompression tank 230, and the gaseous components are introduced into the hydrothermal carbonization reactor 220c. Simultaneously, steam is applied by the external heat source, and thus a temperature of the hydrothermal carbonization reactor 220c is raised.

The gaseous component and the steam that is supplied from the outside can be injected into the hydrothermal carbonization reactor 220c as soon as they are generated regardless of their sequence because the ejector 1110 is disposed at the point at which the supply path of the external heat source and the supply path of the gaseous component of the steam-water separator 240 are joined. Furthermore, the speed at which a temperature of the hydrothermal carbonization reactor 220c rises is increased because the gaseous component is supplied to the hydrothermal carbonization reactor 220c more rapidly by the ejector 1110.

FIG. 12 is a diagram illustrating a construction of the digestion liquor treatment unit according to an embodiment of the present disclosure.

Referring to FIG. 12, the digestion liquor treatment unit 180 includes a flow equalization tank 1210, a partial nitrification reactor 1220, an AOB granule generation tank 1230, an intermediate storage tank 1240, and the anammox reaction tank 1250.

**The** flow equalization tank 1210 is supplied with digestion liquor that is discharged from the dewatering unit 140 and stores it until it is fed into the partial nitrification reactor 1220.

**The** partial nitrification reactor 1220 receives the digestion liquor from the flow equalization tank 1210, and oxidizes some (approximately half) of ammonia nitrogen contained in the liquor into nitrite nitrogen by using ammonium oxidation bacteria (AOB) granules (hereinafter abbreviated as "AOB granules"). The partial nitrification reactor 1220 receives, from the AOB granule generation tank 1230, the AOB granules that are generated by the AOB granule generation tank 1230. The partial nitrification reactor 1220 oxidizes some of ammonia nitrogen within the supplied liquor into nitrite nitrogen by using the received AOB granules. The partial nitrification reactor 1220 performs a partial nitrification reaction until the ratio of ammonia nitrogen and nitrite nitrogen becomes 1:1.32. In the partial nitrification reactor 1220, AOB become dominated and nitrification is performed. After performing the partial nitrification reaction, the partial nitrification reactor 1220 settles the AOB granules, discharges the treated water (supernatant) to the intermediate storage tank 1240 and returns the poorly settling sludge to the AOB granule generation tank 1230. The partial nitrification reactor 1220 can secure improved treatment efficiency and reduce settling time by utilizing the AOB granules.

The AOB granule generation tank 1230 generates AOB granules by receiving the poorly settling sludge from the partial nitrification reactor 1220, and supplies the AOB granules to the partial nitrification reactor 1220 again. As such processes are repeatedly performed, the partial nitrification reactor 1220 can perform the retention of granules and stable partial nitrification.

The AOB granule generation tank 1230 may use an airlift form reactor (not illustrated) in order to generate granules effectively, but the present disclosure is not limited thereto.

The intermediate storage tank 1240 receives the treated water from the partial nitrification reactor 1220 and temporarily stores the treated water until the treated water is supplied to the anammox reaction tank 1250.

The intermediate storage tank 1240 stores the treated water discharged from the partial nitrification reactor 1220, and supplies the nitritated treated water in accordance with a flow of downstream continuous-flow anammox reaction tank 1250.

**As** solid matters included in the treated water that is stored in the intermediate storage tank 1240 are settled, sludge may be formed. The sludge that is formed in the intermediate storage tank 1240 is returned to the second storage tank 130 again.

The anammox reaction tank 1250 receives partially nitritated treated water from the intermediate storage tank 1240, removes nitrogen, and returns it to the sewage and wastewater treatment apparatus.

The anammox reaction tank 1250 includes anaerobic ammonium oxidizing bacteria (AnAOB) therein. The AnAOB removes nitrogen by converting ammonia included in the treated water into nitrogen gas by using nitrites as an electron accepter. A chemical formula related to the conversion is as follows.

1.0NH₄⁺ + 1.32NO₂⁻ + 0.066HCO₃⁻ + 0.13H⁺ → 1.02N₂ + 0.26NO₃⁻ + 0.066CH₂O_{0.5}N_{0.15} + 2.03H₂O

The anammox reaction tank 1250 may consist of a completely mixed moving bed biofilm reactor (not illustrated), but the present disclosure is not limited thereto.

The above description is merely a description of the technical spirit of the present embodiment, and those skilled in the art may change and modify the present embodiment in various ways without departing from the essential characteristic of the present embodiment. Accordingly, the embodiments should not be construed as limiting the technical spirit of the present embodiment, but should be construed as describing the technical spirit of the present embodiment. The technical spirit of the present embodiment is not restricted by the embodiments. The range of protection of the present embodiment should be construed based on the following claims.

## Claims

1. An organic waste reduction and biogas enhancement system (100) combined with a hydrothermal carbonization device (160), the system comprising:
a storage tank (110) configured to receive and store organic waste;
an anaerobic digester (120) configured to digest organic waste from the storage tank (110), digest organic matter, and generate biogas;
a dewatering unit (140) configured to primarily dewater organic waste discharged from the anaerobic digester (120);
a hydrothermal carbonization device (160) configured to receive and hydrothermally carbonize the dewaterd organic waste; and
a filter press (170) configured to secondarily dewater the hydrothermally carbonized product discharged from the hydrothermal carbonization device (160),
**characterized in that:** the hydrothermal carbonization device (160) comprises:
a preheating tank (210) configured to receive the organic waste discharged by the dewatering unit (140) and to preheat the organic waste;
a plurality of hydrothermal carbonization reactors (220) each configured to receive the preheated organic waste from the preheating tank (210) and to hydrothermally carbonize the preheated organic waste within a preset environment;
a decompression tank (230) configured to receive all of remaining products except some of gaseous components, among the hydrothermally carbonized products, from each hydrothermal carbonization reactor (220), separate a gaseous component and components other than gases, and discharge the gaseous component to the preheating tank (210) and discharge remaining products;
a steam-water separator (240) configured to receive some of the gaseous component, among the hydrothermally carbonized products, from any one hydrothermal carbonization reactor (220), separate a gaseous component and a liquid component, and discharge the gaseous component to another hydrothermal carbonization reactor (220) and the liquid component to the decompression tank (230);
a heat exchanger (250) configured to receive the hydrothermally carbonized product discharged from the decompression tank (230), cool the hydrothermally carbonized product at a preset temperature, and supply the hydrothermally carbonized product to the filter press (170); and
a controller configured to control an operation of each of the components within the hydrothermal carbonization device (160),
wherein each hydrothermal carbonization reactor (220) performs hydrothermal carbonization of the organic waste through the same process, but performs different operations with a time difference lag.

2. The system (100) of claim 1, wherein the controller controls some of the gaseous component to be discharged to the steam-water separator (240) when pressure attributable to the gaseous component within any one hydrothermal carbonization reactor (220) is a preset reference value or more.

3. The system (100) of claim 2, wherein the preset environment has pressure of 5 to 64 bar and a temperature of 150 to 280°C.

4. The system (100) of claim 1, wherein the hydrothermal carbonization device (160) further comprises an ejector (1110) configured to inject, into any one hydrothermal carbonization reactor (220), steam that is introduced from an outside and the gaseous component that is discharged by being separated in the steam-water separator (240).

5. The system (100) of claim 1, wherein the heat exchanger (250) is configured to combine the heated cooling water generated by cooling the hydrothermally carbonized product with a boiler that supplies steam to the hydrothermal carbonization device (160), or to combine the heated cooling water with feed water for the boiler that heats the anaerobic digester (120), thereby reducing energy consumption.

6. The system (100) of claim 1, wherein the filter press (170) is configured to discharge effluent generated during the dewatering of the hydrothermally carbonized product to the storage tank (110) for use in anaerobic digestion.

7. The system (100) of claim 1, wherein the organic waste is selected from a group consisting of concentrate sludge generated from a sewage and wastewater treatment apparatus, food waste on which pre-treatment has been performed, wastewater, livestock manure, and a mixture of any one or more of them.

8. The system (100) of claim 1, further comprising a digestion liquor treatment unit (180) configured to remove a nitrogen component within liquor discharged from the dewatering unit (140).

9. The system (100) of claim 8, wherein the digestion liquor treatment unit (180) comprises:
a partial nitrification reactor (1220) configured to perform partial nitrification by receiving the digestion liquor;
an ammonium oxide bacterium (AOB) granule generation tank (1230) configured to generate AOB granules by receiving sludge with reduced settling properties, which is present in the partial nitrification reactor (1220);
an intermediate storage tank (1240) configured to receive and store treated water from the partial nitrification reactor while settling and removing solid matters from the treated water; and
an anammox reaction tank (1250) configured to receive the treated water from the intermediate storage tank and to remove a nitrogen component by an anaerobic ammonium oxide (anammox) reaction.

## Patentansprüche

1. System (100) zur Reduzierung von organischem Abfall und zur Biogasverstärkung in Kombination mit einer hydrothermalen Karbonisierungsvorrichtung (160), wobei das System Folgendes umfasst:
einen Lagertank (110), der dazu konfiguriert ist, organischen Abfall aufzunehmen und zu lagern;
einen anaeroben Fermenter (120), der dazu konfiguriert ist, organischen Abfall aus dem Lagertank (110) zu fermentieren, organische Materie zu fermentieren und Biogas zu erzeugen;
eine Entwässerungseinheit (140), die dazu konfiguriert ist, primär organischen Abfall, der aus dem anaeroben Fermenter (120) ausgestoßen wird, zu entwässern;
eine hydrothermale Karbonisierungsvorrichtung (160), die dazu konfiguriert ist, den entwässerten organischen Abfall aufzunehmen und hydrothermal zu karbonisieren; und
eine Filterpresse (170), die dazu konfiguriert ist, das hydrothermal karbonisierte Produkt, das aus der hydrothermalen Karbonisierungsvorrichtung (160) ausgestoßen wird, sekundär zu entwässern,
**dadurch gekennzeichnet, dass:** die hydrothermale Karbonisierungsvorrichtung (160) Folgendes umfasst:
einen Vorwärmtank (210), der dazu konfiguriert ist, den organischen Abfall, der durch die Entwässerungseinheit (140) ausgestoßen wird, aufzunehmen und den organischen Abfall vorzuwärmen;
eine Vielzahl von hydrothermalen Karbonisierungsreaktoren (220), die jeweils dazu konfiguriert ist, den vorgewärmten organischen Abfall aus dem Vorwärmtank (210) aufzunehmen und den vorgewärmten organischen Abfall innerhalb einer voreingestellten Umgebung hydrothermal zu karbonisieren;
einen Dekompressionstank (230), der dazu konfiguriert ist, alle von übrigen Produkten außer einigen gasförmigen Komponenten unter den hydrothermal karbonisierten Produkten aus jedem hydrothermalen Karbonisierungsreaktor (220) aufzunehmen, eine gasförmige Komponente und andere Komponenten als Gase zu trennen und die gasförmige Komponente zu dem Vorwärmtank (210) auszustoßen und übrige Produkte auszustoßen;
einen Dampf-Wasser-Trenner (240), der dazu konfiguriert ist, etwas der gasförmigen Komponente unter den hydrothermal karbonisierten Produkten von einem beliebigen hydrothermalen Karbonisierungsreaktor (220) aufzunehmen, eine gasförmige Komponente und eine flüssige Komponente zu trennen und die gasförmige Komponente zu einem anderen hydrothermalen Karbonisierungsreaktor (220) und die flüssige Komponente zu dem Dekompressionstank (230) auszustoßen;
einen Wärmetauscher (250), der dazu konfiguriert ist, das hydrothermal karbonisierte Produkt, das aus dem Dekompressionstank (230) ausgestoßen wird, zu empfangen, das hydrothermal karbonisierte Produkt bei einer voreingestellten Temperatur zu kühlen und das hydrothermal karbonisierte Produkt der Filterpresse (170) zuzuführen; und
eine Steuerung, die dazu konfiguriert ist, einen Betrieb von jeder der Komponenten innerhalb der hydrothermalen Karbonisierungsvorrichtung (160) zu steuern,
wobei jeder hydrothermale Karbonisierungsreaktor (220) hydrothermale Karbonisierung des organischen Abfalls durch den gleichen Prozess durchführt, aber verschiedene Betriebe mit einer Zeitdifferenzverzögerung durchführt.

2. System (100) nach Anspruch 1, wobei die Steuerung etwas der gasförmigen Komponente steuert, die zu dem Dampf-Wasser-Trenner (240) auszustoßen ist, wenn Druck, welcher der gasförmigen Komponente innerhalb eines beliebigen hydrothermalen Karbonisierungsreaktors (220) zuzuschreiben ist, ein voreingestellter Referenzwert oder mehr ist.

3. System (100) nach Anspruch 2, wobei die voreingestellte Umgebung Druck von 5 bis 64 bar und eine Temperatur von 150 bis 280 °C aufweist.

4. System (100) nach Anspruch 1, wobei die hydrothermale Karbonisierungsvorrichtung (160) ferner einen Ejektor (1110) umfasst, der dazu konfiguriert ist, Dampf, der von einer Außenseite eingeführt wird, und die gasförmige Komponente, die durch Trennen in dem Dampf-Wasser-Trenner (240) ausgestoßen wird, in einen beliebigen hydrothermalen Karbonisierungsreaktor (220) einzuspritzen.

5. System (100) nach Anspruch 1, wobei der Wärmetauscher (250) dazu konfiguriert ist, das erwärmte Kühlwasser, das durch Kühlen des hydrothermal karbonisierten Produkts erzeugt wird, mit einem Kessel zu kombinieren, welcher der hydrothermalen Karbonisierungsvorrichtung (160) Dampf zuführt, oder das erwärmte Kühlwasser mit Speisewasser für den Kessel zu kombinieren, der den anaeroben Fermenter (120) erwärmt, wodurch Energieverbrauch reduziert wird.

6. System (100) nach Anspruch 1, wobei die Filterpresse (170) dazu konfiguriert ist, Abfluss, der während der Entwässerung des hydrothermal karbonisierten Produkts erzeugt wird, zu dem Lagertank (110) zur Verwendung bei anaerober Fermentation auszustoßen.

7. System (100) nach Anspruch 1, wobei der organische Abfall ausgewählt ist aus einer Gruppe bestehend aus Konzentratschlamm, der aus einer Abwasser- und Schmutzwasserbehandlungsvorrichtung erzeugt wird, Lebensmittelabfall, an dem Vorbehandlung durchgeführt worden ist, Schmutzwasser, Viehdung und einer Mischung aus einem beliebigen oder mehreren davon.

8. System (100) nach Anspruch 1, ferner umfassend eine Fermentationsflüssigkeitsbehandlungseinheit (180), die dazu konfiguriert ist, eine Stickstoffkomponente innerhalb von Flüssigkeit, die aus der Entwässerungseinheit (140) ausgestoßen wird, zu entfernen.

9. System (100) nach Anspruch 8, wobei die Fermentationsflüssigkeitsbehandlungseinheit (180) Folgendes umfasst:
einen Teilnitrifikationsreaktor (1220), der dazu konfiguriert ist, Teilnitrifikation durch Aufnehmen der Fermentationsflüssigkeit durchzuführen;
ein Ammoniumoxidbakterium(AOB-)Granulaterzeugungstank (1230), der dazu konfiguriert ist, AOB-Granulate durch Aufnehmen von Schlamm mit reduzierten Absetzungseigenschaften zu erzeugen, der in dem Teilnitrifikationsreaktor (1220) vorhanden ist;
einen Zwischenlagertank (1240), der dazu konfiguriert ist, behandeltes Wasser aus dem Teilnitrifikationsreaktor aufzunehmen und zu lagern, während feste Materie aus dem behandelten Wasser abgesetzt und entfernt wird; und
einen Anammoxreaktionstank (1250), der dazu konfiguriert ist, das behandelte Wasser aus dem Zwischenlagertank aufzunehmen und eine Stickstoffkomponente durch eine anaerobe Ammoniumoxid(Anammox-)Reaktion zu entfernen.

## Revendications

1. Système de réduction de déchets organiques et d'amélioration du biogaz (100) combiné à un dispositif de carbonisation hydrothermale (160), le système comprenant :
un réservoir de stockage (110) conçu pour recevoir et stocker des déchets organiques ;
un digesteur anaérobie (120) conçu pour digérer les déchets organiques du réservoir de stockage (110), digérer la matière organique et générer du biogaz ;
une unité de déshydratation (140) conçue pour déshydrater principalement les déchets organiques évacués du digesteur anaérobie (120) ;
un dispositif de carbonisation hydrothermale (160) conçu pour recevoir et carboniser hydrothermalement les déchets organiques déshydratés ; et
un filtre-presse (170) conçu pour déshydrater secondairement le produit carbonisé hydrothermalement évacué du dispositif de carbonisation hydrothermale (160),
**caractérisé en ce que :** le dispositif de carbonisation hydrothermale (160) comprend :
un réservoir de préchauffage (210) conçu pour recevoir les déchets organiques évacués par l'unité de déshydratation (140) et pour préchauffer les déchets organiques ;
une pluralité de réacteurs de carbonisation hydrothermale (220) chacun étant conçu pour recevoir les déchets organiques préchauffés du réservoir de préchauffage (210) et pour carboniser hydrothermalement les déchets organiques préchauffés dans un environnement prédéfini ;
un réservoir de décompression (230) conçu pour recevoir tous les produits restants, à l'exception de certains composants gazeux, parmi les produits carbonisés hydrothermalement, à partir de chaque réacteur de carbonisation hydrothermique (220), séparer un composant gazeux et des composants autres que des gaz, et évacuer le composant gazeux dans le réservoir de préchauffage (210) et évacuer les produits restants ;
un séparateur vapeur-eau (240) conçu pour recevoir une partie du composant gazeux, parmi les produits carbonisés hydrothermalement, à partir d'un quelconque réacteur de carbonisation hydrothermale (220), séparer un composant gazeux et un composant liquide, et évacuer le composant gazeux vers un autre réacteur de carbonisation hydrothermale (220) et le composant liquide vers le réservoir de décompression (230) ;
un échangeur de chaleur (250) conçu pour recevoir le produit carbonisé hydrothermalement évacué du réservoir de décompression (230), refroidir le produit carbonisé hydrothermalement à une température prédéfinie et fournir le produit carbonisé hydrothermalement au filtre-presse (170) ; et
un dispositif de commande conçu pour commander un fonctionnement de chacun des composants dans le dispositif de carbonisation hydrothermale (160),
chaque réacteur de carbonisation hydrothermale (220) effectuant la carbonisation hydrothermale des déchets organiques par le même processus, mais effectuant des opérations différentes avec un décalage temporel.

2. Système (100) de la revendication 1, dans lequel le dispositif de commande commande une partie du composant gazeux devant être évacué vers le séparateur vapeur-eau (240) lorsque la pression attribuable au composant gazeux à l'intérieur d'un quelconque réacteur de carbonisation hydrothermale (220) est une valeur de référence prédéfinie ou plus.

3. Système (100) de la revendication 2, dans lequel l'environnement prédéfini a une pression de 5 à 64 bar et une température de 150 à 280 °C.

4. Système (100) de la revendication 1, dans lequel le dispositif de carbonisation hydrothermale (160) comprend en outre un éjecteur (1110) conçu pour injecter, dans un quelconque réacteur de carbonisation hydrothermale (220), de la vapeur qui est introduite depuis l'extérieur et le composant gazeux qui est évacué en étant séparé dans le séparateur vapeur-eau (240).

5. Système (100) de la revendication 1, dans lequel l'échangeur de chaleur (250) est conçu pour combiner l'eau de refroidissement chauffée générée en refroidissant le produit carbonisé hydrothermalement avec une chaudière qui fournit de la vapeur au dispositif de carbonisation hydrothermale (160), ou pour combiner l'eau de refroidissement chauffée avec de l'eau d'alimentation pour la chaudière qui chauffe le digesteur anaérobie (120), réduisant ainsi la consommation d'énergie.

6. Système (100) de la revendication 1, dans lequel le filtre-presse (170) est conçu pour évacuer l'effluent généré pendant la déshydratation du produit carbonisé hydrothermalement vers le réservoir de stockage (110) pour une utilisation dans la digestion anaérobie.

7. Système (100) de la revendication 1, dans lequel les déchets organiques sont sélectionnés dans un groupe constitué de boues concentrées générées à partir d'un appareil de traitement des eaux d'égout et des eaux usées, de déchets alimentaires ayant été soumis à un prétraitement, d'eaux usées, de fumier de bétail et d'un mélange de l'un quelconque ou de plusieurs d'entre eux.

8. Système (100) de la revendication 1, comprenant en outre une unité de traitement de la liqueur de digestion (180) conçu pour éliminer un composant azote dans la liqueur évacuée de l'unité de déshydratation (140).

9. Système (100) de la revendication 8, dans lequel l'unité de traitement de la liqueur de digestion (180) comprend :
un réacteur de nitrification partielle (1220) conçu pour effectuer une nitrification partielle en recevant la liqueur de digestion ;
un réservoir de génération de granulés de bactéries oxydant l'ammonium (AOB) (1230) conçu pour générer des granulés AOB en recevant des boues présentant des propriétés de sédimentation réduites, qui est présent dans le réacteur de nitrification partielle (1220) ;
un réservoir de stockage intermédiaire (1240) conçu pour recevoir et stocker de l'eau traitée provenant du réacteur de nitrification partielle tout en sédimentant et en éliminant des matières solides de l'eau traitée ; et
un réservoir de réaction anammox (1250) conçu pour recevoir l'eau traitée du réservoir de stockage intermédiaire et pour éliminer un composant azote par une réaction d'oxydation anaérobie de l'ammonium (anammox).
